# FASCICULE DE BREVET EUROPEEN

(11) **EP 2 804 788 B1**
(45) Date de publication et mention de la délivrance du brevet: **23.08.2017**
(21) Numéro de dépôt: 12705895.6
(22) Date de dépôt: 17.01.2012
(51) Int. Cl.: B60R 21/18, B60R 21/233, B60R 21/231

(54) **DISPOSITIF DE PROTECTION DE LA TÊTE ET DU COU D'UN INDIVIDU**
VORRICHTUNG ZUM SCHÜTZEN DES KOPFES UND DES HALSES EINER PERSON
PROTECTING DEVICE FOR THE HEAD AND THE NECK OF AN IDIVIDUAL

(43) Date de publication de la demande: 26.11.2014
(73) Titulaire: Helite S.a.r.l., 21380 Messigny-et-Vantoux (FR)
(72) Inventeur: QUARREY, Alexandre, F-21380 Messigny-et-Vantoux (FR); THEVENOT, Gérard, F-21380 Messigny-et-Vantoux (FR)
(74) Mandataire: Cabinet Plasseraud
(86) Numéro de dépôt international: PCT/FR2012/050098
(87) Numéro de publication internationale: WO 2013/107951

(56) Documents cités:
- US-A1- 2003 001 378
- US-A1- 2009 236 834
- US-A1- 2011 006 508

## Description

La présente invention est relative aux dispositifs de protection de la tête, du cou et du tronc d'un individu, en particulier un individu assis sur un siège d'un véhicule.

Plus particulièrement, l'invention se rapporte principalement à un dispositif de retenue pour la protection de la tête, du cou et du tronc d'un individu adulte ou adolescent, le dispositif comprenant :
- au moins un premier sac gonflable agencé au moins en vis-à-vis d'une zone antérieure de l'épaule droite dudit individu,
- au moins un second sac gonflable agencé au moins en vis-à-vis d'une zone antérieure de l'épaule gauche dudit individu, les premier et second sacs gonflables étant prévus pour être gonflés dans des conditions prédéterminées.

Le document US 7665761 décrit un exemple d'un tel dispositif, dans lequel on peut trouver en complément un organe gonflable apte à se déployer en face de la tête de l'individu utilisateur. Un autre exemple d'un dispositif tel que défini ci-dessus est connu du document US 2009/0236834. Cependant, les solutions décrites ne sont pas satisfaisantes en cas de choc pour limiter le mouvement vers l'avant de la tête de l'individu utilisateur, et n'évite pas complètement le risque d'un impact direct de la tête sur un objet.

La présente invention a notamment pour but de pallier ces inconvénients.

A cet effet, selon l'invention, un dispositif du genre en question est caractérisé en ce qu'il comporte au moins un élément de liaison reliant directement les premier et second sacs gonflables, agencé en vis-à-vis d'une zone centrale du torse dudit individu, et en ce qu'en cas de déclenchement, les premier et second sacs gonflables se déploient au moins vers le haut et en direction l'un de l'autre, l'élément de liaison empêchant alors les premier et second sacs gonflables de s'écarter l'un de l'autre lors du déploiement.

Grâce à ces dispositions, une telle configuration permet, en cas de choc, de limiter le mouvement de la tête vers l'avant et sur les côtés. On obtient en outre un effet enveloppant qui permet de diminuer le risque de contact direct entre la tête et un objet. De plus, la protection du cou est améliorée de par la limitation du mouvement de la tête et par la limitation des efforts engendrés au niveau du cou.

Dans des modes de réalisation préférés de l'invention, on peut éventuellement avoir recours en outre à l'une et/ou à l'autre des dispositions suivantes :
- l'élément de liaison peut comprendre un clip verrouillable, configuré pour être verrouillé et/ou déverrouillé et pour former une liaison détachable, moyennant quoi l'installation et la désinstallation du dispositif est facilitée ;
- l'élément de liaison peut comprendre une portion déformable, apte à se déformer élastiquement ou plastiquement pour s'allonger tout en empêchant les premier et second sacs gonflables de s'écarter l'un de l'autre, par exemple d'au plus 5 cm ; on peut ainsi absorber de l'énergie et écrêter les valeurs d'accélérations subies par l'individu ;
- chaque sac gonflable peut être, avant gonflage, plié et enfermé dans un étui d'un organe de sécurité, ledit étui étant configuré pour s'ouvrir lors du gonflage du sac ; moyennant quoi chaque sac gonflable est protégé de l'environnement en temps normal; de plus le sac plié occupe un volume réduit et ne gêne pas les gestes de l'utilisateur ;
- chaque organe de sécurité peut comprendre en outre un fourreau fixé audit étui, ledit fourreau étant adapté pour recevoir par engagement une bretelle verticale d'un harnais de retenue ; moyennant quoi la position de l'étui et du sac gonflable est bien définie par la position de la bretelle du harnais ;
- le fourreau s'étend selon un axe et comprend deux extrémités axiales opposées ouvertes, de sorte que le fourreau peut coulisser par rapport à la bretelle verticale, et la position de l'organe de sécurité selon l'axe peut être ajustée ; de sorte que la position ajustable des sacs gonflable permet d'optimiser la protection de l'individu ;
- le fourreau et l'étui avec le sac plié sont plaqués l'un contre l'autre dans un plan parallèle à la bretelle verticale du harnais et assemblés par couture ; de sorte que l'organe de sécurité occupe un volume réduit et ne gêne pas les gestes de l'utilisateur ;
- chaque sac gonflable comprend une portion de fixation au moyen de laquelle le sac est relié solidairement à une portion de l'étui ; moyennant quoi le sac gonflable est retenu en cas de déploiement par la portion de fixation qui transmet les efforts ;
- chaque organe de sécurité peut comprendre une portion arrière ancrée sur une partie structurelle du siège ou du véhicule ; de sorte que les efforts engendrés pendant un choc sont transmis à un élément de structure solide ;
- les deux sacs gonflables sont reliés par une communication fluide et sont reliés à un générateur de gaz unique ; de sorte qu'il est possible d'utiliser une seule source de gaz ce qui réduit le coût du système;
- chaque sac gonflable comprend des évents ou une valve de limitation de pression ; on peut ainsi mieux absorber l'énergie du choc et limiter les valeurs de décélération ;
- chaque sac gonflable comprend au moins une portion de tissu poreux ; on peut ainsi mieux absorber l'énergie du choc et limiter les valeurs de décélération ;
- chacun des premier et second sacs gonflables est alimenté par un générateur de gaz spécifique ; de sorte que l'on peut prévoir une séquence chronologique de gonflage des sacs à gaz, en fonction de la direction du choc ;
- le dispositif peut comprendre en outre un harnais de retenue comportant une bretelle verticale gauche et une bretelle verticale droite, dans lequel le premier organe de sécurité forme avec la bretelle verticale droite un ensemble intégré et le second organe de sécurité forme avec la bretelle verticale gauche un ensemble intégré ; Moyennant quoi l'utilisation du dispositif par un utilisateur s'en trouve simplifiée.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue de côté d'un siège de véhicule équipé d'un dispositif selon l'invention, sur lequel est installé un utilisateur,
- la figure 2 est une vue de face du siège de la figure 1,
- la figure 3 est une vue de trois quart face analogue à la figure 2, avec les sacs gonflables en configuration de déploiement,
- la figure 4 est une vue de dessus partielle du siège du dispositif de la figure 1,
- la figure 5 est une vue de détail de l'organe de sécurité,
- la figure 6 représente un véhicule de type Ultra Léger Motorisé équipé du dispositif de la figure 1,
- la figure 7 est une vue analogue à la figure 4, représentant une variante du dispositif de la figure 1,
- la figure 8 montre une section transversale d'un des organes de sécurité.

Sur les différentes figures, les mêmes références désignent des éléments identiques ou similaires.

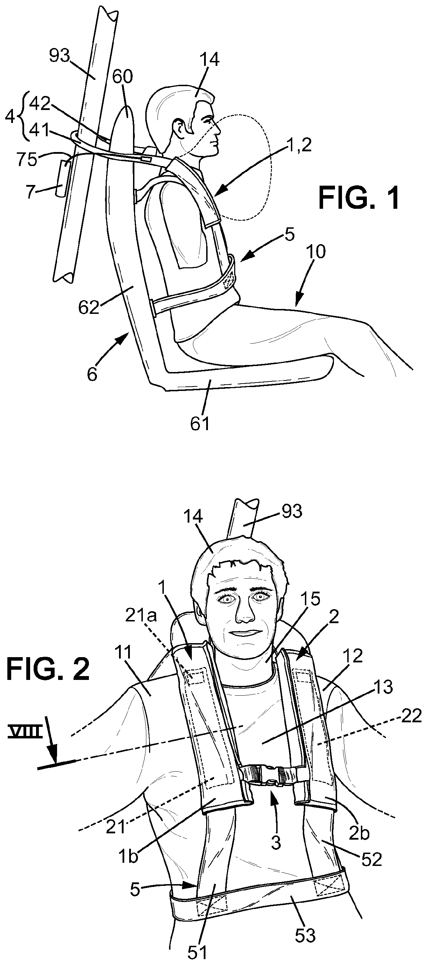

La figure 1 représente une vue de côté d'un siège 6 de véhicule équipé d'un dispositif selon l'invention. Le véhicule en question peut être tout type de véhicule terrestre ou aérien, par exemple un aéronef de type 'ULM' (pour Ultra Léger Motorisé), un hélicoptère, un deux-roues motorisé, un tricycle motorisé, ou même encore un quadricycle de type 'quad' ou de type 'kart', sans pour autant exclure les automobiles, camions et autobus de type connu. Le véhicule peut aussi être un véhicule spatial comme une fusée ou un véhicule maritime comme un jetski, un engin nautique rapide ou un hovercraft. L'invention peut aussi s'appliquer aux engins, appareils et véhicules de parc d'attraction.

Sur le siège 6 du véhicule est installé en position assise un utilisateur 10 adulte ou adolescent (appelé aussi 'individu' dans la suite), cet utilisateur 10 peut être indifféremment le pilote du véhicule ou un passager du véhicule. Le terme adolescent n'est pas limitatif et englobe tout enfant d'âge supérieur à 10 ans.

Il est habituel de prévoir pour l'utilisateur diverses protections contre les chutes dudit utilisateur et contre les chocs ou accidents que le véhicule pourrait subir. En particulier, il peut être prévu que l'utilisateur 10 soit maintenu en position assise par un harnais de sécurité 5. Ce harnais 5 est fixé au dossier 62 et/ou à l'assise 61 du siège et/ou à une partie structurelle du véhicule. Ce harnais 5 peut comprendre une première bretelle verticale 51 pour maintenir l'épaule droite l'utilisateur, une seconde bretelle verticale 52 pour maintenir l'épaule gauche l'utilisateur et une ceinture ventrale 53 pour maintenir le bassin de l'utilisateur.

Dans l'exemple illustré, notamment en référence à la figure 2, les bretelles verticales 51,52 sont attachées séparément à la ceinture ventrale 53 mais il pourrait en être autrement. L'ancrage des ceintures sur le siège ou sur une partie structurelle du véhicule peut prendre différentes formes (non décrites en détails ici).

Le siège peut être pourvu de rebords latéraux faisant saillie (non représentés) pour le maintien latéral du corps de l'individu. La partie supérieure 60 du dossier du siège 62 s'étend jusqu'à la hauteur du cou 15 et de la tête 14 de l'utilisateur.

Outre le harnais de sécurité, il peut être prévu des moyens de protection basés sur des coussins de sécurité gonflables aussi appelés sacs gonflables ou 'airbags'. Ces airbags sont usuellement prévus pour s'interposer lors de leur déploiement entre l'utilisateur et des objet ou obstacles que l'utilisateur pourrait heurter.

Parmi ces moyens de sécurité gonflables, selon l'invention, il est prévu un dispositif de protection comprenant un premier organe de sécurité 1 agencé au moins sur une zone antérieure de l'épaule droite 11 dudit utilisateur et un second organe de sécurité 2 agencé au moins sur une zone antérieure de l'épaule gauche 12 dudit utilisateur. A l'état de repos, c'est-à-dire avant déclenchement du gonflage, chacun des premier et second organes de sécurité 1,2 se présente comme une bande s'étendant depuis la zone claviculaire vers le bas, de manière adjacente au torse de l'utilisateur. Chaque organe de sécurité 1,2 présente une épaisseur relativement faible dans le sens avant-arrière pour ne pas gêner les mouvements de l'utilisateur ; la largeur de l'organe de sécurité 1 peut être plus importante que celle de la sangle de la bretelle verticale du harnais.

Le premier organe de sécurité 1 peut être positionné simplement de manière adjacente à la bretelle verticale 51 du harnais, comme cela sera le cas si le dispositif de protection est physiquement indépendant du harnais. Cependant, dans une configuration alternative, l'organe de sécurité 1 et la bretelle adjacente pourraient former une seule pièce et constituer un ensemble intégré : le dispositif de protection est alors intégré à la fonction harnais de sécurité, ce qui simplifie les manipulations lors de l'installation et/ou de l'équipement de l'utilisateur.

Le premier organe de sécurité 1 comprend un étui 1b dans lequel est agencé un sac à gaz replié 21. Ainsi le premier organe de sécurité 1 comprend un premier sac à gaz gonflable 21 et le second organe de sécurité 2 comprend, de façon symétrique ou non au premier, un second sac à gaz gonflable 22. Les premier et second sacs à gaz 21,22 sont prévus pour être gonflés par l'introduction d'air ou de gaz dans les sacs à gaz. Les premier et second sacs à gaz 21,22 sont enfermés dans leur étui respectif 1b, 2b pour ne pas être accessible et être protégés de l'environnement.

Le premier sac gonflable 21 est attaché à l'étui 1b par une portion de fixation 21a dans une partie supérieure de l'étui, la partie inférieure du sac étant libre de se déplacer vers le haut pendant le gonflage et aussi en direction du sac à gaz opposé.

Le déclenchement du gonflage est opéré dans des conditions prédéterminées. Les conditions prédéterminées peuvent être par exemple la détection d'un choc ou d'une décélération supérieure à un seuil prédéterminé. Dans l'exemple illustré, le véhicule se déplace selon une direction longitudinale dirigé vers l'avant de l'utilisateur. Lors d'un choc ou une décélération brutale dans cette direction longitudinale, la tête de l'utilisateur a tendance à être projetée vers l'avant en raison des forces d'inertie ; par conséquent un choc ou une décélération brutale dans cette direction longitudinale provoquera le déclenchement du gonflage des sacs à gaz.

La détection d'accélération ou décélération transversale peut également conduire au déclenchement du gonflage des sacs à gaz.

De préférence, les moyens de détection et de déclenchement sont automatiques ; ils peuvent par exemple faire appel à un accéléromètre. Les moyens de détection peuvent être propres au dispositif de protection, ou bien ils peuvent faire partie de l'équipement du véhicule.

De façon alternative, le déclenchement peut être manuel, par appui sur un bouton poussoir par l'utilisateur ou une autre personne.

De plus, le dispositif de protection comprend un élément de liaison 3 reliant les premier et second sacs gonflables. L'élément de liaison 3 est agencé sur une zone centrale du torse dudit individu, et relie dans l'exemple illustré les premier et second sacs à gaz 21,22 à l'opposé de la portion de fixation 21a. A l'état repos, l'élément de liaison 3 se trouve donc en vis-à-vis d'une zone centrale du torse 13 de l'utilisateur. De préférence, l'élément de liaison 3 relie les premier et second sacs gonflables comme illustré sur les Figures.

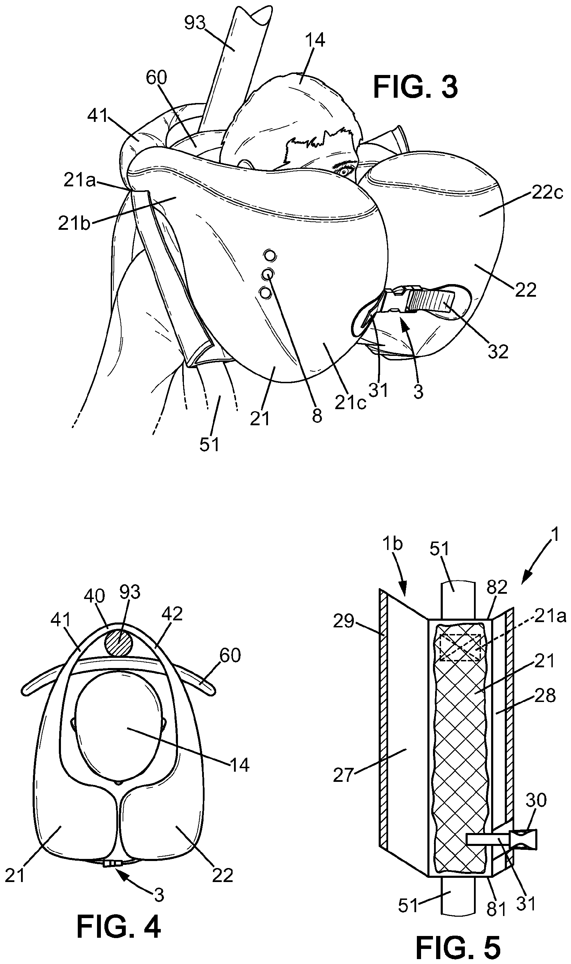

Lors du déploiement, les sacs sortent des étuis et se gonflent, ils se déploient au moins vers le haut et se déploient en direction l'un de l'autre. Ils peuvent en outre se déployer aussi vers l'avant et sur les côtés. De préférence, les premier et second sacs à gaz 21,22 viennent, lors de leur gonflement au contact l'un de l'autre, dans une région situé devant le visage de l'utilisateur 10, comme illustré à la figure 3. Les premier et second sacs à gaz 21,22 entraînent avec eux l'élément de liaison 3 qui se déplace vers le haut pour se retrouver en face du visage de l'utilisateur.

Lors du déploiement, l'élément de liaison 3 empêche les premier et second sacs à gaz 21,22 de s'écarter l'un de l'autre. Par voie de conséquence, la tête de l'utilisateur est arrêtée par les premier et second sacs à gaz 21,22 gonflés et la course de la tête est ainsi réduite. La forme des sacs à gaz gonflés présente un volume plus important 21c à l'extrémité opposée à la fixation sur l'étui, alors que à l'extrémité proche de la fixation 21a sur l'étui, le volume est plus réduit 21b pour laisser de la place pour le maxillaire et les joues de l'utilisateur.

Non seulement le mouvement vers l'avant de la tête est limité, mais aussi le mouvement latéral vers les cotés. Le dispositif confère donc une protection contre les chocs longitudinaux et latéraux et/ou composés (direction quelconque), qui satisfait pleinement les critères établis par les études physiologiques comme le critère connu sous le nom de 'HIC' ('Head Injury Criterium'), et aussi les critères d'accélération maximum et d'efforts au cou maximum.

A l'état gonflé, le volume de chacun des premier et second sacs à gaz 21,22 est de préférence supérieur à 5 litres.

De plus, chaque organe de sécurité comprend une portion arrière 41,42 reliée à l'étui correspondant 1b,2b et ancrée sur une partie structurelle du siège ou du véhicule. En l'occurrence, dans l'exemple illustré aux figures 1 à 6, le premier organe de sécurité 1 comporte une portion arrière 41 et le second de sécurité 2 comporte une portion arrière 42 reliées entre elles et formant un ensemble d'ancrage 4 qui s'appuie sur un élément de structure du véhicule (ici en l'occurrence une poutre 93 sensiblement verticale). Pendant le choc, la transmission des efforts de retenue vers la structure est ainsi assurée, indépendamment de la solidité du siège. Le harnais 5 peut lui aussi être ancré sur la structure si la structure du siège ne permet pas de transmettre de façon adéquate les efforts de retenue.

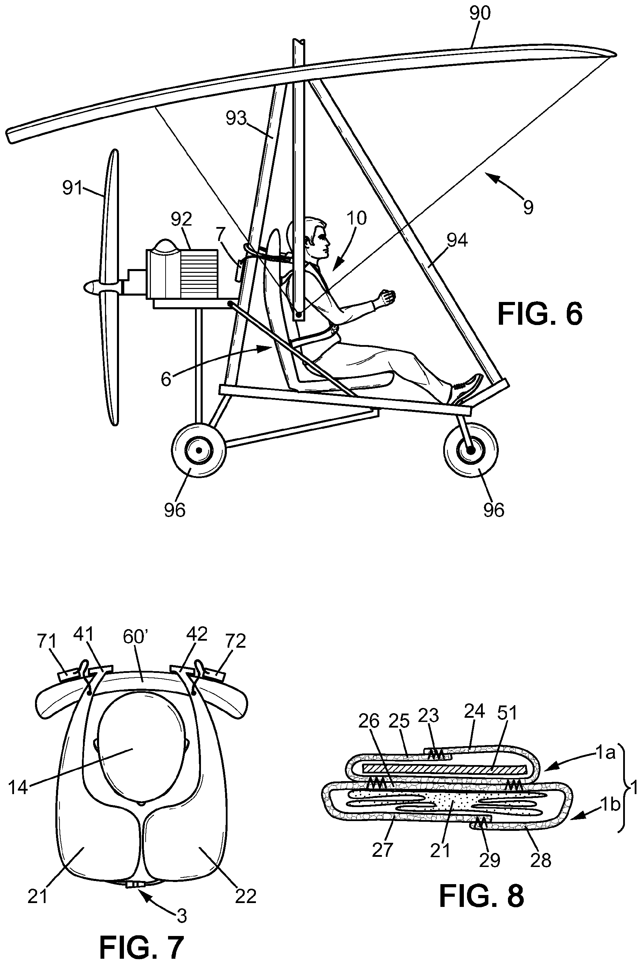

Dans le cas où le siège présente une robustesse structurelle suffisante, une alternative est présentée à la Figure 7, dans laquelle chaque portion arrière 41,42 est ancrée de manière indépendante au haut du dossier 60', par tout moyen adéquat. La fixation du siège sur la structure transmet les efforts vers la structure du véhicule.

Il est aussi possible dans certains cas (non représentés) de fixer les portions arrière d'ancrage 41,42 à une ou plusieurs parties du harnais de retenue 5. Ceci peut être obtenu en cousant la partie postérieure de l'étui de chaque organe de sécurité à une ou plusieurs partie de sangle formant le harnais de retenue 5.

Selon un aspect avantageux de l'invention, l'énergie de l'amortissement de la tête sur les premier et second sacs gonflables 21,22 peut être absorbée par l'un des moyens ci-après :
- des évents 8 ménagés dans le sac à gaz, ou une valve de limitation de pression (non représentée), qui permettent l'évacuation partielle des gaz pendant l'amortissement du choc,
- les sacs à gaz 21,22 peuvent être fabriqués tout ou partie en tissu poreux, qui permet également l'évacuation partielle des gaz pendant l'amortissement du choc,
- l'élément de liaison 3 peut comprendre une portion déformable, apte à se déformer élastiquement ou plastiquement pour absorber de l'énergie, de préférence avec un allongement inférieur à 5 cm,
- les portions arrière 41,42 peuvent également comprendre une portion déformable, apte à se déformer élastiquement ou plastiquement pour absorber de l'énergie.

Selon un aspect avantageux de l'invention, l'élément de liaison 3 peut comprendre une première portion de sangle 31 attachée au premier sac à gaz 21 et pourvue à l'extrémité opposée d'un moyen de clipsage femelle 30. De plus, l'élément de liaison 3 peut comprendre une seconde portion de sangle 32 attachée au second sac à gaz 22 et pourvue à l'extrémité opposée d'un moyen de clipsage mâle qui peut être reçu dans le moyen de clipsage femelle. La portion déformable précitée absorbant l'énergie peut être agencée dans l'une et/ou l'autres des portions de sangle 31,32 susmentionnées.

Les moyens de clipsage mâle et femelle forment ensemble un clip verrouillable, configuré pour être verrouillé lorsque l'utilisateur est assis sur le siège et que le dispositif est prêt à fonctionner, et pour être déverrouillé pour faciliter l'installation de l'utilisateur sur le siège et pour que l'utilisateur puisse aisément sortir du siège. De préférence, on choisit un système de verrouillage double dans lequel deux actions complémentaires doivent être effectuées pour libérer le verrouillage. Tout autre moyen de verrouillage ou d'accrochage pour l'élément de liaison peut être utilisé dans le cadre de la présente invention. De même les portions de sangles pourraient être remplacées par des portions de corde, de chainette ou de ficelle.

En référence aux figures 2, 5 et 8, qui représentent le premier organe de sécurité 1, l'étui 1b comprend une enveloppe ayant une partie postérieure premier et second sacs à gaz 21,22 qui s'étend parallèlement à la bretelle verticale 51 et deux parties antérieures 27,28 qui, avant gonflage sont jointe l'une à l'autre par une couture fusible 29 ; ladite couture fusible 29 étant configurée pour se rompre sous la pression de gonflage. Après ouverture des parties antérieures 28,27, le sac à gaz 21 peut se déployer en se remplissant de gaz. Alternativement les parties antérieures 28,27 peuvent être jointes par recouvrement de l'une sur l'autre et maintien par adhésifs, crochets et boucles (Velcro®) ou bouton pression.

Selon un aspect avantageux de l'invention, l'étui 1b, 2b de chaque organe de sécurité est adossé à un fourreau. Le fourreau 1a du premier organe de sécurité est fixé à la partie postérieure 26 de l'étui 1b. Le fourreau est adapté pour recevoir par engagement la bretelle verticale 51 du harnais de retenue 5.

Le fourreau s'étend selon un axe principal, sensiblement vertical en position d'utilisation sur un utilisateur assis. Le fourreau comprend deux extrémités axiales opposées ouvertes 81,82, de sorte que le fourreau peut coulisser par rapport à la bretelle verticale. La position de l'organe de sécurité 1 selon l'axe peut être ainsi ajustée. Ceci permet d'optimiser la position initiale du sac à gaz et la position qu'il occupe après gonflement, en vue de maximiser l'effet enveloppant des deux sacs à gaz par rapport à la tête 14 de l'utilisateur.

Le fourreau peut comprendre une portion de fixation à l'étui 1b, et des portions arrière 24,25 jointes par une couture 23 ou autre pour former un logement apte à recevoir la sangle de la bretelle de harnais.

D'autres moyens pour positionner l'étui par rapport à la bretelle de harnais peuvent être envisagés comme une bande adhésive, un système de crochets et boucles (Velcro®) ou de bouton pression.

Selon un aspect avantageux de l'invention, les deux sacs à gaz sont reliés par une communication fluide, comme visible notamment sur la figure 4. Dans ce cas, les deux sacs à gaz sont gonflés à partir d'une source de gaz unique 7. Un tuyau souple 75 met en communication la source de gaz et les deux sacs à gaz à gonfler.

Alternativement chaque sac à gaz 21,22 est configuré pour être gonflé par une source de gaz spécifique, comme illustré à la Figure 7 où le premier sac à gaz est gonflé par un premier générateur de gaz 71 et le second sac à gaz est gonflé par un second générateur de gaz 72. Le déclenchement peut être dans ce cas plus sélectif et on peut choisir de gonfler en premier le sac gonflable du coté où le choc intervient, puis de gonfler l'autre organe selon une séquence chronologique prédéterminée. Ce déclenchement sélectif peut être commandé par une unité de commande (non représentée) apte à interpréter les données de décélération ou toutes autres données.

Un armement initial du dispositif de protection peut être nécessaire pour autoriser le déclenchement ultérieur du gonflage et éviter un déclenchement intempestif. Cet armement peut être la conséquence de la fermeture par clipsage de l'élément de liaison 3. Cet armement initial peut être obtenu grâce à la fermeture d'un contacteur électrique intégré à l'élément de liaison.

Comme illustré à la Figure 6, le dispositif de protection peut être utilisé à bord d'un aéronef 9 de type ULM. Ce dernier comprend une aile 90 portante, des roues 96, une ossature 93,94, un moteur 92, une hélice propulsive 91 et un siège 6 apte à recevoir un piloté et/ou un passager. Les moyens d'ancrage 4 s'appuient sur une poutre verticale 93 agencé juste derrière le siège 6.

Il est entendu que l'invention vise aussi tout dispositif de protection individuel sauf les dispositifs de puériculture.

La mise en oeuvre du dispositif de protection décrit ci-dessus procure une retenue satisfaisante de la tête, du cou et du tronc de l'utilisateur en cas de choc longitudinal, latéral ou mixte. En conséquence de quoi le harnais de sécurité peut être simplifié, et en particulier les bretelles verticales peuvent être allégées en terme de contraintes à subir ; elles pourraient même être complètement supprimées.

## Revendications

1. Dispositif de retenue pour la protection de la tête, du cou et du tronc d'un individu adulte ou adolescent (10), ledit individu étant assis sur un siège d'un véhicule,
le dispositif comprenant :
- au moins un premier sac gonflable (21) agencé au moins en vis-à-vis d'une zone antérieure de l'épaule droite dudit individu,
- au moins un second sac gonflable (22) agencé au moins en vis-à-vis d'une zone antérieure de l'épaule gauche dudit individu,
les premier et second sacs gonflables (21,22) étant prévus pour être gonflés dans des conditions prédéterminées, auquel cas les premier et second sacs gonflables (21,22) se déploient au moins vers le haut et en direction l'un de l'autre,
le dispositif de retenue étant caractérisé en qu'il comprend en outre au moins un élément de liaison (3) reliant directement les premier et second sacs gonflables, agencé en vis-à-vis d'une zone centrale du torse (13) dudit individu, l'élément de liaison (3) empêchant les premier et second sacs gonflables de s'écarter l'un de l'autre lors du déploiement.

2. Dispositif selon la revendication 1, dans lequel l'élément de liaison (3) comprend un clip verrouillable (30), configuré pour être verrouillé et/ou déverrouillé et pour former une liaison détachable.

3. Dispositif selon l'une des revendications 1 à 2, dans lequel l'élément de liaison (3) comprend une portion déformable, apte à se déformer élastiquement ou plastiquement pour s'allonger tout en empêchant substantiellement les premier et second sacs gonflables de s'écarter l'un de l'autre.

4. Dispositif selon l'une des revendications 1 à 3, dans lequel chaque sac gonflable est, avant gonflage, plié et enfermé dans un étui (1b) d'un organe de sécurité (1), ledit étui étant configuré pour s'ouvrir lors du gonflage du sac.

5. Dispositif selon la revendication 4, dans lequel chaque organe de sécurité (1) comprend en outre un fourreau (1a) fixé audit étui (1b), ledit fourreau étant adapté pour recevoir par engagement une bretelle verticale (51) d'un harnais de retenue.

6. Dispositif selon l'une des revendications 4 à 5, dans lequel le fourreau s'étend selon un axe et comprend deux extrémités axiales opposées ouvertes (81,82), de sorte que le fourreau peut coulisser par rapport à la bretelle verticale, et la position de l'organe de sécurité (1) selon l'axe peut être ajustée.

7. Dispositif selon l'une des revendications 4 à 6, dans lequel le fourreau (1a) et l'étui (1b) avec le sac plié sont plaqués l'un contre l'autre dans un plan parallèle à la bretelle verticale du harnais et assemblés par couture.

8. Dispositif selon l'une des revendications 4 à 7, dans lequel chaque sac gonflable comprend une portion de fixation (21a) au moyen de laquelle le sac est relié solidairement à une portion de l'étui.

9. Dispositif selon l'une des revendications 1 à 8, comprenant en outre une partie structurelle du siège ou du véhicule, dans lequel chaque organe de sécurité (1,2) comprend une portion arrière (41,42) ancrée sur ladite partie structurelle du siège ou du véhicule.

10. Dispositif selon l'une des revendications 1 à 9, dans lequel les deux sacs gonflables (21,22) sont reliés par une communication fluide et sont reliés à un générateur de gaz unique.

11. dispositif selon l'une des revendications 1 à 10, dans lequel chaque sac gonflable (21,22) comprend des évents (8) ou une valve de limitation de pression.

12. dispositif selon l'une des revendications 1 à 10, dans lequel chaque sac gonflable (21,22) comprend au moins une portion de tissu poreux.

13. Dispositif selon l'une des revendications 1 à 8, dans lequel chacun des premier et second sacs gonflables est relié à un générateur de gaz spécifique, le dispositif comprenant une unité de commande pour commander sélectivement le gonflage de chacun des sacs.

14. Dispositif selon l'une des revendications 1 à 13, comprenant en outre un harnais de retenue (5) comportant une bretelle verticale gauche (51) et une bretelle verticale droite (52), dans lequel le premier organe de sécurité (1) forme avec la bretelle verticale gauche un ensemble intégré et le second organe de sécurité forme avec la bretelle verticale gauche un ensemble intégré.

## Patentansprüche

1. Rückhaltevorrichtung für den Schutz des Kopfes, des Nackens und des Oberkörpers einer erwachsenen oder heranwachsenden Person (10), wobei die Person auf einem Sitz eines Fahrzeugs sitzt,
wobei die Vorrichtung umfasst:
- wenigstens einen ersten Airbag (21), welcher wenigstens gegenüber einer vorderen Zone der rechten Schulter der Person angeordnet ist,
- wenigstens einen zweiten Airbag (22), welcher wenigstens gegenüber einer vorderen Zone der linken Schulter der Person angeordnet ist,
wobei der erste und zweite Airbag (21, 22) dazu vorgesehen sind, unter vorbestimmten Bedingungen aufgeblasen zu werden, in welchem Fall sich der erste und zweite Airbag (21, 22) wenigstens nach oben und in Richtung aufeinander zu entfalten,
wobei die Rückhaltevorrichtung **dadurch gekennzeichnet ist, dass** sie ferner wenigstens ein Verbindungselement (3) umfasst, welches den ersten und den zweiten Airbag direkt miteinander verbindet, angeordnet gegenüber einer zentralen Zone des Torsos (13) der Person, wobei das Verbindungselement (3) verhindert, dass der erste und der zweite Airbag sich bei einem Entfalten gegenseitig verdrängen.

2. Vorrichtung nach Anspruch 1, wobei das Verbindungselement (3) einen verschließbaren Clip (30) umfasst, welcher dazu eingerichtet ist, verschlossen und/oder geöffnet zu werden, und dazu, eine lösbare Verbindung herzustellen.

3. Vorrichtung nach einem der Ansprüche 1 bis 2, wobei das Verbindungselement (3) einen verformbaren Abschnitt umfasst, welcher in der Lage ist, sich elastisch oder plastisch zu verformen, um sich zu verlängern, wobei im Wesentlichen verhindert wird, dass der erste und zweite Airbag sich gegenseitig verdrängen.

4. Vorrichtung nach einem der Ansprüche 1 bis 3, wobei jeder Airbag vor dem Aufblasen gefaltet und in einer Hülle (1 b) einer Sicherheitseinrichtung (1) eingeschlossen ist, wobei die Hülle dazu eingerichtet ist, sich beim Aufblasen des Airbags zu öffnen.

5. Vorrichtung nach Anspruch 4, wobei jede Sicherheitseinrichtung (1) ferner eine Hülse (1a) umfasst, welche an der Hülle (1b) befestigt ist, wobei die Hülse dazu eingerichtet ist, einen vertikalen Träger (51) eines Halte-Gurtzeugs durch Eingreifen aufzunehmen.

6. Vorrichtung nach einem der Ansprüche 4 bis 5, wobei die Hülse sich entlang einer Achse erstreckt und zwei axial gegenüberliegende offene Enden (81, 82) derart umfasst, dass die Hülse bezüglich dem vertikalen Träger gleiten kann und die Position der Sicherheitseinrichtung (1) entlang der Achse eingestellt werden kann.

7. Vorrichtung nach einem der Ansprüche 4 bis 6, wobei die Hülse (1a) und die Hülle (1 b) mit dem gefalteten Airbag in einer Ebene parallel zu dem vertikalen Träger des Gurtzeugs aneinander anliegen und durch Nähen zusammengefügt sind.

8. Vorrichtung nach einem der Ansprüche 4 bis 7, wobei jeder Airbag einen Befestigungsabschnitt (21 a) umfasst, mittels welchem der Airbag fest an einem Abschnitt der Hülle angebracht ist.

9. Vorrichtung nach einem der Ansprüche 1 bis 8, ferner umfassend einen strukturellen Abschnitt des Sitzes oder des Fahrzeugs, wobei jede Sicherheitseinrichtung (1, 2) einen hinteren Abschnitt (41, 42) umfasst, welcher an dem strukturellen Abschnitt des Sitzes oder des Fahrzeugs verankert ist.

10. Vorrichtung nach einem der Ansprüche 1 bis 9, wobei die beiden Airbags (21, 22) durch eine Fluidverbindung verbunden sind und mit einem einzelnen Gasgenerator verbunden sind.

11. Vorrichtung nach einem der Ansprüche 1 bis 10, wobei jeder Airbag (21, 22) Lüftungsöffnungen (8) oder ein Druckbegrenzungsventil umfasst.

12. Vorrichtung nach einem der Ansprüche 1 bis 10, wobei jeder Airbag (21, 22) wenigstens einen Abschnitt aus porösem Gewebe umfasst.

13. Vorrichtung nach einem der Ansprüche 1 bis 8, wobei jeder aus dem ersten und dem zweiten Airbag mit einem spezifischen Gasgenerator verbunden ist, wobei die Vorrichtung eine Steuereinheit zum selektiven Steuern des Aufblasens von jedem der Airbags umfasst.

14. Vorrichtung nach einem der Ansprüche 1 bis 13, ferner umfassend ein Halte-Gurtzeug (5), umfassend einen linken vertikalen Träger (51) und einen rechten vertikalen Träger (52), wobei die erste Sicherheitseinrichtung (1) zusammen mit dem linken vertikalen Träger eine integrierte Baugruppe bildet, und die zweite Sicherheitseinrichtung mit dem linken vertikalen Träger eine integrierte Baugruppe bildet.

## Claims

1. Restraining device for protecting the head, neck and trunk of an adult or adolescent person (10), said person being seated on a seat of a vehicle,
the device comprising:
- at least a first inflatable bag (21) disposed at least facing a front region of the right-hand shoulder of said person,
- at least a second inflatable bag (22) disposed at least facing a front region of the left-hand shoulder of said person,
the first and second inflatable bags (21, 22) being provided with a view to being inflated under predetermined conditions, in which case the first and second inflatable bags (21, 22) are deployed at least upwards and in the direction towards one another,
the restraining device being **characterised in that** it further comprises at least one connecting element (3) directly connecting the first and second inflatable bags, disposed facing a central region of the torso (13) of said person, the connecting element (3) preventing the first and second inflatable bags from coming apart from one another on deployment.

2. Device as claimed in claim 1, wherein the connecting element (3) comprises a lockable clip (30) designed to be locked and/or unlocked and to form a detachable connection.

3. Device as claimed in one of claims 1 to 2, wherein the connecting element (3) comprises a deformable portion capable of elastically or plastically deforming so as to be stretched, while substantially preventing the first and second inflatable bags from coming apart from one another.

4. Device as claimed in one of claims 1 to 3, wherein before being inflated, each inflatable bag is folded and enclosed in a case (1b) of a safety element (1), said case being designed to open when the bag is inflated.

5. Device as claimed in claim 4, wherein each safety element (1) further comprises a sheath (1a) attached to said case (1b), said sheath being designed to receive a vertical strap (51) of a restraining harness in an engaged arrangement.

6. Device as claimed in one of claims 4 to 5, wherein the sheath extends along an axis and comprises two opposite axial ends (81, 82) that are open so that the sheath is able to slide relative to the vertical strap and the position of the safety element (1) along the axis can be adjusted.

7. Device as claimed in one of claims 4 to 6, wherein the sheath (1a) and the case (1b) with the folded bag are placed one against the other in a plane parallel with the vertical strap of the harness and assembled by stitching.

8. Device as claimed in one of claims 4 to 7, wherein each inflatable bag comprises a fixing portion (21a) by means of which the bag is firmly connected to a portion of the case.

9. Device as claimed in one of claims 1 to 8, further comprising a structural part of the seat or vehicle, wherein each safety element (1, 2) comprises a rear portion (41, 42) anchored on said structural part of the seat or vehicle.

10. Device as claimed in one of claims 1 to 9, wherein the two inflatable bags (21, 22) are connected via a fluid communication and are connected to a single gas generator.

11. Device as claimed in one of claims 1 to 10, wherein each inflatable bag (21, 22) comprises vents (8) or a pressure-limiting valve.

12. Device as claimed in one of claims 1 to 10, wherein each inflatable bag (21, 22) comprises at least one portion of porous fabric.

13. Device as claimed in one of claims 1 to 8, wherein each of the first and second inflatable bags is connected to a specific gas generator, the device comprising a control unit for selectively controlling the inflation of each of the bags.

14. Device as claimed in one of claims 1 to 13, further comprising a restraining harness (5) comprising a left-hand vertical strap (51) and a right-hand vertical strap (52), wherein the first safety element (1) forms an integrated unit with the left-hand vertical strap and the second safety element forms an integrated unit with the left-hand vertical strap.
